# EUROPEAN PATENT SPECIFICATION

(11) **EP 3 383 965 B1**
(45) Date of publication and mention of the grant of the patent: **21.08.2024**
(21) Application number: 17713823.7
(22) Date of filing: 11.03.2017
(51) Int. Cl.: C09J 7/25, C09J 7/29

(54) **DEFECT-FREE POLYMER FILMS AND RELATED PROTECTIVE SHEETS, ARTICLES, AND METHODS**
DEFEKTFREIE POLYMERFILME UND ZUGEHÖRIGE SCHUTZFOLIEN, ARTIKEL UND VERFAHREN
FILMS POLYMÈRE SANS DÉFAUT ET FEUILLES DE PROTECTION ASSOCIÉES, ARTICLES ET MÉTHODES

(30) Priority: 11.03.2016 US 201662306646 P; 20.09.2016 US 201662396825 P
(43) Date of publication of application: 10.10.2018
(73) Proprietor: PPG Advanced Surface Technologies, LLC, Columbus, OH 43212 (US)
(72) Inventor: MCGUIRE JR., James, Tiburon, CA 94920 (US); STRANGE, Andrew C., Worthington, Ohio 43085 (US); CANAN, Matthew, Hilliard, Ohio 43206 (US); BOOTH, Gregory, Hilliard, Ohio 43206 (US)
(74) Representative: Laufhütte, Dieter
(86) International application number: PCT/US2017/021982
(87) International publication number: WO 2017/156507

(56) References cited:
- EP-A1- 0 271 941
- WO-A1-02/31074
- WO-A1-2010/036981
- WO-A1-2018/045353
- WO-A2-2006/118883
- WO-A2-2007/048141
- FR-A1- 2 762 336

## Description

### BACKGROUND OF THE INVENTION

The present invention relates generally to methods for making multi-layer protective sheets, and methods of making and using the same.

A variety of protective sheets are known. Many of those are based on one or more polyurethane layers. Polyurethane chemistries generally provide one or more properties including the following: environmental resistance, chemical resistance, abrasion resistance, scratch resistance, optical transparency, and other often desirable properties.

There are many commercially available single-layer polyurethane films from a variety of suppliers such as Argotec, LLC (Greenfield, MA) and entrotech, Inc. (Columbus, OH). Single-layer polyurethane films have been found useful as carrier layers in multi-layer sheet applications. Such films, however, have found limited use by themselves for protection of certain types of surfaces. For example, protection of painted surfaces often requires retention of the glossy appearance otherwise provided by a recently painted surface. One of the problems associated with single-layer polyurethane films is their often inadequate ability to retain the glossy appearance desired.

Attempts have been made to combine polyurethane films with other materials in the form of a multi-layer protective sheet in order to improve properties of the films, such as gloss retention and environmental resistance. In some cases, an exterior (or topcoat) layer is applied to a polyurethane carrier layer in order to impart such improved properties. The inclusion of additional layers of material within a protective sheet can negatively impact other properties, however; for example, flexibility of the protective sheet generally decreases as more and thicker layers of material are included in protective sheet constructions. Decreased flexibility can not only make it more difficult to adequately conform the protective sheet for adequate adherence to contoured surfaces, but it can also lead to premature edge lift of the protective sheet during use. In addition, inadequate compatibility between adjacent layers can lead to potential interlayer delamination within such multi-layer protective sheets.

Several protective sheets are readily available on the market today. For example, Minnesota Mining & Manufacturing Co. ("3M") in St. Paul, MN, markets polyurethane-based sheet "Paint Protection Film" under the SCOTCHGARD and VENTURESHIELD product lines. 3M Co.'s PCT Patent Publication No. WO 02/28636 describes a finishing film comprising a flexible polymeric sheet material having a first major surface and a second major surface and a pressure sensitive adhesive layer covering at least a portion of the first major surface of the sheet material. The finishing film is described as being commercially available from 3M Co. under the trade designation, SCOTCHCAL PAINT PROTECTION FILM PUL 0612, and comprising a 6 mil polymer film comprising an aliphatic polycaprolactone-based thermoplastic urethane elastomer. Examples of methods for formation of the polymer film described therein are extrusion, calendaring, wet casting, and the like. Thereafter, a waterborne polyurethane coating is formed on one side of the polymer film, with the other side of the polymer film being laminated to an acrylic pressure sensitive adhesive.

3M Innovative Properties Co.'s PCT Patent Publication No. WO 03/002680 describes an adhesive sheet comprising a flexible base material, an adhesive layer disposed on a back surface of said base material, and a protective layer disposed on a front surface of the base material. The protective layer described therein is made of a hydrophilic film containing a curing resin and a hydrophilic agent of an inorganic oxide. The base material contains a layer containing a first polyurethane resin having a reaction product of polyester polyol and a polyfunctional isocyanate compound. Preferably, the base material comprises a lower layer containing the first polyurethane resin and an upper layer disposed between the lower layer and the protective layer that adheres to the protective layer and contains a second polyurethane resin having a reaction product of a polycarbonate polyol and a polyfunctional isocyanate compound. The upper layer preferably comprises a hard polyurethane resin in comparison with the first polyurethane resin of the lower layer to enable adhesion between the entire base material and the protective layer to be effectively increased through the upper layer, even if the curing resin in the protective layer is comparatively hard and has a low-temperature elongation differing to a large extent from that of the lower layer of the base material. The polyester polyol forming the first polyurethane resin of the lower layer may be formed from a diol having caprolactonediol in the main chain.

U.S. Patent No. 8,765,263, assigned to 3M Innovative Properties Co., describes a multilayer protective film comprising a first layer, a second layer and a pressure sensitive adhesive (PSA) layer. The first layer at least comprises a polyester-based polyurethane, a polycarbonate-based polyurethane, or a combination or blend of both. The second layer at least comprises a polycaprolactone-based thermoplastic polyurethane. One major surface of the first layer is bonded to one major surface of the second layer, and the PSA layer is bonded to an opposite major surface of the second layer such that the second layer is sandwiched between the first layer and the PSA layer. The predominant method of forming the second layer is described as extruding the polycaprolactone-based thermoplastic polyurethane at an elevated temperature through a die, although casting and injection molding are also described.

Due to their superior rheological and viscoelastic properties over other aliphatic polyester polyurethanes in the genus of which they are a part, as well as its ability to impart good water, oil, solvent, and chlorine resistance to the polyurethane produced, polycaprolactone-based polyurethanes are often used in protective sheets. In each of the three aforementioned 3M patent publications describing such a use of polycaprolactone-based polyurethane, the polycaprolactone-based polyurethane layer is positioned adjacent the adhesive layer. It is known, however, that commercially available paint protection film products are prone to leaving a less than desirable amount of adhesive residue on a surface when removed therefrom after use. The presence of adhesive residue on a surface to be protected is counter to the concept of a protective sheet. Thus, alternative protective sheet configurations are still needed in order to further improve properties thereof.

Due to manufacturing methodology typically employed for formation of base/carrier films conventionally used in protective sheets, which methodology typically involves extrusion and other methods for formation of a film from an already polymerized composition, chemical and physical properties of such films has been limited. U.S. Patent No. 8,828,303 describes some of these limitations. For example, some polymer chemistries are not capable of being hot-melt processed due to their relatively high molecular weight and/or the presence of crosslinking, both of which can make it difficult, if not impossible, to hot-melt process preformed pellets of the compositions (as is done generally according to conventional methods of forming polymer films using hot-melt processing) at a temperature below the degradation temperature of the polymer composition or substrate onto which the film is formed. Wet casting polymer film formation methods also have their disadvantages. Whether the system is solventborne or waterborne, it must first be coated onto a desired substrate and then dried to remove solvating or dispersing medium (i.e., organic solvent or water, respectively) in order to form a polymer film. Thus, formation of polymer films of sufficient thickness can be problematic using wet casting methods. In addition, some polymer chemistries are not capable of being formed into polymer films using wet casting methods due to the lack of adequate solubility of such polymers or their constituents in conventional solvents and dispersing mediums.

Thus, the properties of conventionally manufactured polymer films are limited to those particular polymer chemistries that can be formed into films using conventional methodology, again which methodology typically involves extrusion and other methods for formation of a film from an already polymerized composition. Due to the methodology by which they are formed, conventionally manufactured polymer films typically suffer from defects arising from at least one of gelation, die lines, and gauge lines. Due to their negative impact on, for example, visual properties of the final product, the prevalence of defects necessitates exhaustive testing and analysis of polymer film formed to ensure suitability of that polymer film for the intended application.

Gelation results in the presence of gel particles (also referred to as "gel") in the final product. A "gel" is generally understood to be a viscous composition, which in polymer processing can be, for example, an at least partially polymerized composition, one having a relatively high molecular weight, and/or one containing significant amounts of entrapped gas (e.g., air or reaction by-products, such as carbon dioxide). Gels may manifest themselves in various forms and often result from overheating during processing of polymerized compositions into polymer films. For example, gels may take a crosslinked form, result from catalyst or other organic or inorganic residue in stagnating and/or dead regions of resins during extrusion, result from degraded oxidation-related occurrences (e.g., carbon dioxide bubbles resulting from moisture), or have their roots in the supply chain. Gelation can make formation of uniform layers of polymeric material (e.g., films) difficult.

No matter their origin, defects can lead to weak points and rupturing in polymer films and generally compromise suitable of polymer films for many applications. As such, exhaustive efforts are conducted throughout the supply chain to determine the presence and extent of defects. Many defects are readily detectable when viewed with an unaided human eye. Other methods for detection of defects can also be used, including spectroscopy. When detected, defect-laden polymer film must often be scrapped, leading to considerable waste.

Alternative polymer films for use in related multi-layer protective sheets and articles, as well as methods for their formation are, thus, desirable to impart improved properties thereto. Preferred are defect-free polymer films.

Documents WO 2018/045353 A1, WO 2010/036981 A1, EP 0 271 941 A1 and FR 2 762 336 A1 disclose two layer systems comprising a polyurethane layer made by in-situ polymerization and an adhesive layer.

### BRIEF SUMMARY OF THE INVENTION

The invention is defined in the appended claims.

Multi-layer protective sheets made by a method of the invention include at least an improved carrier layer and are useful in a range of indoor and outdoor applications in, for example, the transportation, architectural and sporting goods industries. The protective sheets can advantageously be applied to at least a portion of a surface of any article where protection is desired. Such articles include, for example, motorized vehicles and non-motorized vehicles (e.g., conventional bicycles) amongst a multitude of other applications. The surface to be protected can be painted or unpainted.

In one embodiment, a multi-layer protective sheet comprises a defect-free carrier layer. As compared to conventional protective sheets including a conventionally formed polyurethane carrier layer (i.e., which conventional formation typically involves extrusion and other methods for formation of a film from an already polymerized composition, where polymerization of the material used to form the film is essentially complete prior to formation of the film therefrom), protective sheets of the present invention do not include such a layer adjacent the adhesive layer, the result being an unexpected improvement in one or more desired properties in addition to the processing efficiencies imparted thereby.

According to one aspect of the invention, the improved polyurethane-based carrier layer in protective sheets of the invention is polymerized in-situ. It is to be understood that, as used herein, when a polymerizable composition is polymerized into a desired polymer film "in-situ," polymerization of the polymer comprising the film begins just before, while, or shortly after the polymerizable composition is being positioned into the desired film format and polymerization is essentially completed during such positioning or shortly thereafter. Typically, "just before" and "shortly after," as used in reference to timing of when polymerization begins, refer to time periods of no more than about thirty seconds. Surprisingly, use of an in-situ polymerized polyurethane-based carrier layer was found to facilitate improvements in physical, including visual, properties desired in addition to the processing efficiencies imparted thereby.

As used herein, "loss factor" refers to the ratio of loss modulus to storage modulus for a carrier layer so tested. The loss factor is ultimately an indication of the effectiveness of a material's damping qualities. The "peak loss factor" refers to the highest loss factor value determined when the carrier layer is so tested. The higher the loss factor of a material, the more efficient the material will be in effectively accomplishing energy absorption and dispersal.

According to another aspect of the invention, the improved polyurethane-based carrier layer in protective sheets of the invention has a peak loss factor of at least about 0.5, at least about 0.8, or even at least about 1.2 when tested as a standalone film according to the Loss Factor Test Method described below.

According to the invention, a multi-layer protective sheet made according to the invention comprises the improved polyurethane-based carrier layer and an adhesive layer on one major surface thereof. More specifically, a multi-layer protective sheet comprises sequential layers as follows: a topcoat layer; the improved polyurethane-based carrier layer; and, an adhesive layer.

### BRIEF DESCRIPTION OF THE SEVERAL VIEWS OF THE DRAWINGS

Figure 1 is a graph of Loss Factor (also referred to as Tan Delta) versus Temperature for polyurethane-based carrier layers used in protective sheets of the invention and conventionally formed polyurethane carrier layers used in conventional protective sheets.
Figure 2 is a graph of Storage Modulus versus Temperature for polyurethane-based carrier layers used in protective sheets of the invention and conventionally formed polyurethane carrier layers used in conventional protective sheets.

### DETAILED DESCRIPTION OF THE INVENTION

The present invention is directed toward improved multi-layer protective sheets, including at least one defect-free polymer film layer therein. Protective sheets of the invention are advantageously not only capable of protecting a surface with improved properties, but also capable of being more cleanly removed therefrom than conventional protective sheets including conventionally formed polyurethane carrier layers.

According to one aspect of the invention, adhesive residue remaining on a surface from which the protective sheet is removed after use is minimized or eliminated by providing a polyurethane-based carrier layer adjacent the adhesive layer that is capable of absorbing more energy during stretching and/or impact than that associated with conventionally formed polyurethane carrier layers typically used in conventional protective sheets. That is, the improved polyurethane-based carrier layer used in protective sheets of the invention is capable of exhibiting more effective damping qualities (as evidenced by its "peak loss factor" described herein) than those associated with conventionally formed polyurethane carrier layers. Including such a layer adjacent the adhesive layer facilitates better continued anchorage of the adhesive layer during application of the protective sheet and, hence, less residual adhesive on a surface after removal of the protective sheet therefrom.

According to another aspect of the invention, properties of individual layers within a multi-layer protective sheet are better balanced according to the invention when using such a polyurethane-based carrier layer. For example, when a relatively high modulus topcoat layer is present within the protective sheet, the polyurethane-based carrier layer having a relatively high loss factor adjacent such a topcoat layer facilitates a more uniform rate and degree of recovery across thickness of the protective sheet when the protective sheet is stretched and/or impacted.

Preferably, multi-layer protective sheets of the invention are advantageously not only capable of protecting a surface with better balanced properties and leaving less residual adhesive after removal from a surface, but they also have enhanced recoverability to enable protection and ease of application to non-planar surfaces. As used herein, "recoverability" refers to a material's ability to be stretched and recover to essentially its original state after stretching. Preferred multi-layer protective sheets are capable of recovering to essentially their original state when stretched (i.e., elongated) to a length of up to about 125% of their initial length. Preferably, multi-layer protective sheets are capable of recovering to essentially their original state when stretched to a length of up to about 150% of their initial length. According to one aspect of the invention, multi-layer protective sheets are capable of elongating to a length of up to more than about 200% of their initial length before breaking.

According to the invention, a multi-layer protective sheet of the invention comprises a topcoat layer, the improved polyurethane-based carrier layer and an adhesive layer on one major surface thereof. Each of those layers is described in further detail below. In addition, multi-layer protective sheets of the invention may include a resilient layer sandwiched between the improved polyurethane-based carrier layer and the adhesive layer as described in US 2018-0163093 A1.

### Carrier Layer

The term "carrier layer" is used herein to refer to the layer(s) of polymer film adjacent to the adhesive layer. In certain contexts, a carrier layer may also be referred to as a "base layer," "support layer," or a similar designation. In general, the carrier layer of protective sheets of the invention is referred to as a "mid-ply layer" when it contains multiple layers (i.e., "n" number of individual layers). However, the carrier layer of protective sheets of the invention can be a single film layer according to other embodiments of the invention. When multiple layers form the carrier layer, each of the "n" individual layers can be the same or different chemistries. In an exemplary embodiment, each of the "n" individual layers has essentially the same chemistry.

According to the invention, carrier layers used in protective sheets of the invention are polyurethane-based. For simplicity, the term "polyurethane" as used herein includes polymers containing urethane (also known as carbamate) linkages, urea linkages, or combinations thereof (i.e., in the case of poly(urethane-urea)s). Thus, polyurethane-based carrier layers contain at least urethane linkages, urea linkages, or combinations thereof. Furthermore, polyurethane-based carrier layers are based on polymers where the polymeric backbone has at least 40%, preferably at least 60%, and more preferably at least 80% urethane and/or urea repeat linkages formed in-situ during the polymerization process.

Polyurethane-based carrier layers are prepared according to methods of the invention by reacting components, which include at least one isocyanate-reactive (e.g., hydroxy-functional, such as polyol) component and at least one isocyanate-functional (e.g., polyisocyanate) component. For example, components of exemplary polymerizable compositions that are useful in the formation of polyurethane-based carrier layers according to methods of the invention are described in U.S. Patent No. 8,828,303.

In exemplary embodiments, polymerization of the polymerizable composition is initiated using at least one radiation source selected from ultraviolet radiation, thermal radiation, and electron beam radiation. Methods of the invention can utilize continuous processing or batch processing. For example, continuous processing, such as web-based, in-situ polymerization of the polyurethane-based carrier layer using relatively low energy ultraviolet radiation (e.g., having an energy of less than about 100 mW/cm²), can be used in one embodiment of the invention. As another example, batch processing, such as coating an ultraviolet-curable composition onto a discrete substrate and irradiating the same to form the polyurethane-based carrier layer in-situ can be used in another embodiment of the invention.

According to a preferred aspect of methods of the invention, the polymerizable composition for formation of the polyurethane-based carrier layer is essentially free of solvents. In addition to, for example, environmental and safety concerns associated with solvent-based processing, solvent-based processing typically entails use of elevated temperatures for effective removal of excess solvent from the polymerized composition. Thus, it is preferred that polyurethane-based carrier layers are essentially free of unreacted solvent. Accordingly, it is preferred that the polymerizable compositions from which they are formed are essentially free of solvents.

Any suitable additives can be present in the carrier layer. Other additives are selected as known to those skilled in the art based on the intended application. Those skilled in the art are readily able to determine the amount of such additives to use for the desired effect.

According to one embodiment of the invention, the carrier layer has a thickness of about 5 microns to about 1,250 microns. Each of the "n" number of individual film layers therein can be as thin as about 5 microns and up to about 50 microns in thickness, the presence of thicker layers being particularly useful in, for example, ballistic applications. However, to impart greater recoverability, a carrier layer having a thickness of about 220 microns or less is used according to one aspect of the invention. According to further aspects, the carrier layer has a thickness of about 180 microns or less. For example, the carrier layer can have a thickness of about 120 microns to about 180 microns. Not only is recoverability of the carrier layer, and hence overall protective sheet, enhanced by using a thinner carrier layer, overall cost of the sheet is reduced in this manner.

As compared to conventional protective sheets including a conventionally formed polyurethane carrier layer (i.e., which conventional formation typically involves extrusion and other methods for formation of a film from an already polymerized composition, where polymerization of the material used to form the film is essentially complete prior to formation of the film therefrom), protective sheets of the present invention do not include such a layer adjacent the adhesive layer, the result being an unexpected improvement in one or more desired properties in addition to the processing efficiencies imparted thereby.

According to one aspect of the invention, the improved polyurethane-based carrier layer in protective sheets of the invention is polymerized in-situ. For example, U.S. Patent No. 8,828,303 and U.S. Patent Publication No. US-2011-0137006-A1, describe methods and films formed by such in-situ polymerization. Surprisingly, use of an in-situ polymerized polyurethane-based carrier layer was found to facilitate improvements in physical properties desired in addition to the processing efficiencies imparted thereby.

Unlike conventional carrier layers, which are typically extruded, in-situ polymerized carrier layers of the invention are not generally thermoplastic in nature. In-situ polymerized carrier layers of the invention look and feel very similar to conventional extruded carrier layers. An improved polymer architecture, however, provides in-situ polymerized carrier layers of the invention with some significantly different properties.

One such significantly different property is solvent resistance. The solvent resistance of preferred in-situ polymerized carrier layers of the invention approximates that associated with conventional crosslinked (i.e., thermoset) materials. As is typical with thermoplastic materials, extruded materials will generally dissolve completely when immersed in a solvent, e.g., tetrahydrofuran, while the in-situ polymerized materials of the invention exhibit only minor swelling when immersed in the same solvent.

Another significantly different property is storage modulus. As is typical with thermoplastic materials, extruded materials generally exhibit a continual drop in storage modulus with increasing temperature. The storage modulus of preferred in-situ polymerized carrier layers of the invention is significantly different, however, in that it exhibits a rubbery plateau region, a characteristic that is consistent with lightly crosslinked elastomers. In one embodiment, the storage modulus of preferred in-situ polymerized polyurethane-based carrier layers is about two orders of magnitude higher than that of thermoplastic polyurethane at conventional extrusion temperatures.

According to another aspect of the invention, the improved polyurethane-based carrier layer in protective sheets of the invention has a peak loss factor of at least about 0.5, at least about 0.8, or even at least about 1.2 when tested as a standalone film according to the Loss Factor Test Method described below.

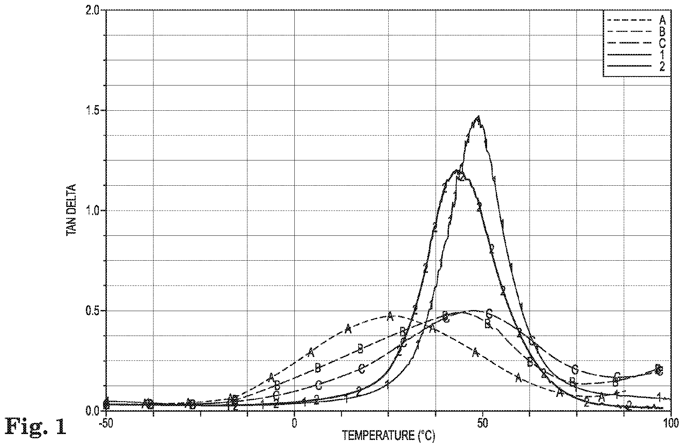

As illustrated in Figure 1, the peak loss factor tested according to the Loss Factor Test Method described below of extruded (i.e., conventionally formed) polyurethane carrier layer films (i.e., as illustrated by the data curves labeled A, B, and C, representing extruded polyurethane-based carrier layers commercially available from Argotec, LLC (Greenfield, MA) under the respective trade designations, ARGOTEC 49510, ARGOTEC 49510-60DV, and ARGOTEC 46510) was significantly lower than those according to the invention, which had a peak loss factor of greater than 0.5 (i.e., as illustrated by the data curves labeled 1 and 2). As also illustrated in Figure 1, the peak loss factor tested for extruded polyurethane carrier films occurred at about 25°C., while the peak loss factor tested for polyurethane-based carrier films used in protective sheets of the invention occurred at about a temperature of at least about 35°C.

In addition, the half-height loss factors (the loss factor which is one-half the value of that of the peak loss factor, of which there are two for each curve) occurred across a temperature span of less than about 40°C., less than about 30°C. in some embodiments, and even less than about 20°C. in some embodiments, for tested polyurethane-based carrier films used in protective sheets of the invention as opposed to occurring across a temperature span of greater than about 40°C., and even greater than about 45°C. in the exemplified embodiments, for extruded polyurethane-based carrier films. For the data curves labeled A and B in Figure 1, the half-height loss factor was measured to be 53°C. For the data curve labeled C in Figure 1, the half-height loss factor was measured to be 49°C. For the data curve labeled 1 in Figure 1, the half-height loss factor was measured to be 18°C. For the data curve labeled 2 in Figure 1, the half-height loss factor was measured to be 22°C.

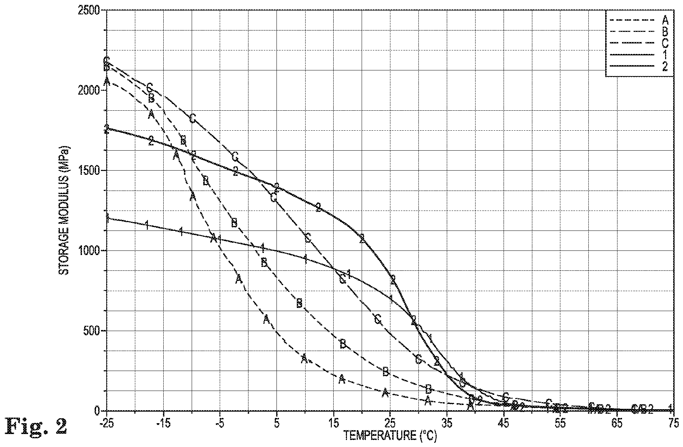

As illustrated in Figure 2, the storage moduli tested according to the Storage Modulus Test Method described below of extruded (i.e., conventionally formed) polyurethane carrier layer films (i.e., as illustrated by the data curves labeled A, B, and C) decreased to a particular value at relatively lower temperatures than those of polyurethane-based carrier films used in protective sheets of the invention.

Preferably, the carrier layer is also defect-free. As used herein, a "defect" is understood to be a visual imperfection such as, for example, a gel particle, a die line, or a gauge line. As used herein, "defect-free" refers to polymer films with no more than the maximum allowable defects shown in Table 1, as set forth in terms of the maximum defect diameter.

**Table 1**

| **Defect Diameter (mm)** | **Maximum Allowable (sq. in.)** |
|---|---|
| 0.1-0.6 | None |
| 0.7-1.4 | 10/25 (5 x 5 sample) |
| 1.5-2.9 | 3/25 (5 x 5 sample) |
| 3.0-5.0 | 1/600 (12 x 50 panel) |

Preferably, no defects are detectable within the polymer film when viewed by an unaided human eye. More preferably, no defects are detectable within the polymer film when viewed with magnification up to about 50x.

Advantageously, in preferred embodiments, conventional p-gels cannot form as the polymer film is not formed in a conventional reactor. Likewise, in preferred embodiments, conventional e-gels cannot form as the polymer film is not formed using a conventional extruder. Once polymerized, preferred polymer films of the invention have never undergone thermoplastic deformation, have never been through an extruder, and have never experienced a thermal excursion at conventional extrusion temperatures. In addition, given that preferred polymer films according to the invention are not formed using a conventional extruder, processing aids - e.g., slip and antiblock additives - that are known to contribute to gel formation and that would conventional be required and used in such methods of formation need not be, and are preferably excluded from, methods for formation of polymer films according to the invention. The resulting polymer films are defect-free.

### Adhesive Layer

The adhesive layer is present adjacent and on a major planar side of the carrier layer opposite from that on which the optional topcoat layer is present. Any suitable adhesive can be used for the adhesive layer according to the invention. In a preferred embodiment, the adhesive layer comprises a pressure-sensitive adhesive.

While any suitable chemistry can be used for the base polymer in the adhesive layer, (meth)acrylate - *i.e*., acrylate and methacrylate - chemistry is preferred. However, other suitable chemistries are known to those skilled in the art and include, for example, those based on synthetic and natural rubbers, polybutadiene and copolymers thereof, polyisoprene and copolymers thereof, and silicones (*e.g*., polydimethylsiloxane and polymethylphenylsiloxane). Any suitable additives can be present in conjunction with the base polymer in the adhesive layer.

In particular, an adhesive based on 2-ethyl hexyl acrylate, vinyl acetate, and acrylic acid monomers polymerized as known to those skilled in the art was found useful in one embodiment of the invention. The adhesive can be crosslinked, for example, using conventional aluminum or melamine crosslinkers.

In one embodiment, the adhesive layer has a thickness of about 5 microns to about 150 microns. In a further embodiment, the adhesive layer has a thickness of about 30 microns to about 100 microns. However, the thickness of the adhesive layer can vary substantially without departing from the spirit and scope of the invention.

Until its application on a surface, the adhesive layer can be protected using, for example, a conventional release liner. As such, the sheet can be stored and shipped easily in roll or other forms until its application.

### Topcoat Layer

Consistent with its name, the topcoat layer is an outwardly exposed, exterior layer of the protective sheet as applied to an article. Any suitable type of material can be used for the topcoat layer in protective sheets of the invention. For example, the topcoat layer can comprise as its base polymer a polycarbonate, a polyvinyl fluoride, a poly(meth)acrylate (*e.g*., a polyacrylate or a polymethacrylate), a polyurethane, modified (*e.g*., hybrid) polymers thereof, or combinations thereof. See U.S. Patent No. 4,476,293 for a description of exemplary polycarbonate-based polyurethanes useful for the topcoat layer of the invention. See also U.S. Patent Publication No. US-2008-0286576-A1 for a description of further exemplary topcoat layers.

Preferably, to maximize gloss retention, soil resistance, and other desirable performance properties, the topcoat layer is of relatively high molecular weight. That is, while the topcoat layer can be formed by extrusion according to some embodiments of the invention, the topcoat layer is preferably of a sufficient molecular weight that extrusion thereof is not practical (*i.e*., if a polyurethane, the polyurethane is not considered extrusion-grade polyurethane by those of ordinary skill in the art). In a preferred embodiment, the topcoat layer is in-situ polymerized in addition to the polyurethane-based carrier layer of the invention.

To protect the topcoat layer of the sheet, a polymer liner (*e.g*., a clear polyester liner) or the like may be used and removed before or after the sheet is applied to a substrate.

### Protective Sheet Formation

For preparation of the adhesive layer, any suitable method can be used. For example, as an alternative to direct (*e.g*., in-situ) formation of the adhesive layer on the carrier layer, an adhesive film of the desired thickness can be cast onto a release film according to one embodiment and as known to those skilled in the art. In that embodiment, the adhesive film supported on the release film can then be assembled with the carrier layer, with the release film being removed before adherence of the multi-layer protective sheet to a surface of an article.

According to the invention, the sheet's adhesive and carrier layers are formed simultaneously by co-extrusion of the polymerizable compositions starting in their liquid form, which step is typically performed at a temperature below about 40°C - *e.g*., about room temperature in one embodiment. The process can be a continuous or batch process.

### Protective Sheet Use

Protective sheets of the invention are useful in a range of indoor and outdoor applications in, for example, the transportation, architectural and sporting goods industries. Exemplary applications including adherence of the protective sheets to articles, including motorized vehicles and non-motorized vehicles (*e.g*., conventional bicycles) amongst others. Although protective sheets can include components influencing their color and/or transparency, preferably protective sheets of the invention have smooth, glossy surfaces and a substantially uniform thickness throughout in order to maximize their capability of providing seemingly invisible protection to a surface.

During use, a protective sheet is applied to a surface, preferably in such a way as to conform to the shape of the surface. Particularly when applying protective sheets to non-planar surfaces, recoverability is important and preferred. If a sheet is not very recoverable, micro-cracking can occur when the film is stretched too far. Relief cuts may be needed in that case in order to apply such sheets to substrates, particularly those having a complex surface of convex and concave features. However, according to preferred embodiments of the invention, relief cuts are not necessary when applying protective sheets of the invention to complex surfaces. Such multi-layer protective sheets are readily conformable due to their recoverability.

Multi-layer protective sheets of the invention can be readily and easily applied to a surface of an article based on knowledge of those skilled in the art. The adhesive layer is generally adhered to the surface to be protected after removal of any release liner present thereon to expose the adhesive. When a pressure-sensitive adhesive layer is used, the multi-layer protective sheet can be more easily repositioned before being firmly adhered to a surface.

### EXAMPLES

### EXEMPLARY TEST METHODS

The examples herein are described in relation to the following testing methods.

### Loss Factor Test Method

A dynamic mechanical analyzer available from DA Instruments (New Castle, DE) under the trade designation, TA Instruments DMA Q800 was used to perform this test in tension mode. Nominal sample sizes having a length of 5-12mm, a width of 4-8mm, and a thickness of 0.02-0.2mm were used. A frequency of 1 Hz, strain of 0.3%, and ramp rate of 3°C./minute were used to measure values for determination of the loss factor of a sample.

### Storage Modulus Test Method

A dynamic mechanical analyzer available from DA Instruments (New Castle, DE) under the trade designation, TA Instruments DMA Q800 was used to perform this test in tension mode. Nominal sample sizes having a length of 5-12mm, a width of 4-8mm, and a thickness of 0.02-0.2mm were used. A frequency of 1 Hz, strain of 0.3%, and ramp rate of 3°C./minute were used to measure values for determination of the storage modulus of a sample.

### Solvent Resistance Test Method

Small discs (25mm diameter x 0.16mm thick) of each material were immersed in separate jars, each containing 16mL of tetrahydrofuran (THF.) Dissolution and/or swelling of the discs of each example was evaluated after five minutes. To evaluate each sample, if the disc was no longer intact, the contents of the jar were poured through a 200 mesh stainless steel filter. If no solid or gel residue was retained on the screen, this verified that the material of the disc had completely dissolved and had not simply broken up into fine pieces. If the disc was intact still at five minutes, the disc was allowed to remain immersed in the THF for six hours total. After six hours total of immersion, the disc was still was removed from the jar and the diameter thereof was measured immediately. Thereafter, the disc was allowed to air dry. After about twenty-four hours, the diameter of the disc was measured again.

### Comparative Example C1

A disc of ARGOTEC 49510 thermoplastic polyurethane film, commercially available from Argotec, LLC (Greenfield, MA), was evaluated according to the Solvent Resistance Test Method described above. After five minutes, the disc was no longer intact and confirmed to have completely dissolved.

### Comparative Example C2

A disc of ARGOTEC 46510 thermoplastic polyurethane film, commercially available from Argotec, LLC (Greenfield, MA), was evaluated according to the Solvent Resistance Test Method described above. After five minutes, the disc was no longer intact and confirmed to have completely dissolved.

### Example 1

A disc of Film 3 prepared according to the Exemplary Formulations below (see Tables 2 and 5) was evaluated according to the Solvent Resistance Test Method described above. After immersion for six hours, the diameter of the disc was measured to be 160% of its original size. After air drying, the disc had returned to its original 25-mm diameter, confirming evaporation of the THF.

### EXEMPLARY FORMULATIONS

Defect-free polymer films and multi-layer protective sheets comprising the same were prepared according to methodology described in U.S. Patent No. 8,828,303 and using components for each layer described below.

### Components

**Table 2**

| **Component** | **Commercial Product Source** | **Description** |
|---|---|---|
| High MW Polyol | entrochem, inc., Columbus, Ohio, under the ECA-457 trade designation | Polyether polyol having a number average molecular weight greater than 2,000 |
| Mid MW Polyol A | entrochem, inc., Columbus, Ohio, under the ECA-456 trade designation | Polyether polyol having a number average molecular weight between 1,400 and 2,000 |
| Mid MW Polyol B | entrochem, inc., Columbus, Ohio, under the ECA-392 trade designation | Caprolactone-based polyol having a number average molecular weight between 1,400 and 2,000 |
| Mid MW Polyol C | entrochem, inc., Columbus, Ohio, under the ECA-495 trade designation | Polyether polyol having a number average molecular weight between 900 and 1,400 |
| Mid MW Polyol D | entrochem, inc., Columbus, Ohio, under the ECA-464 trade designation | Polyether polyol having a number average molecular weight between 400 and 900 |
| Low MW Polyol | entrochem, inc., Columbus, Ohio, under the ECA-386 trade designation | Chain-extender polyol having a number average molecular weight of less than 400 |
| Catalyst | entrochem, inc., Columbus, Ohio, under the ECA-388 trade designation | Tin catalyst |
| UV Initiator | entrochem, inc., Columbus, Ohio, under the ECA-576 trade designation | Photoinitiator |
| UV Stabilizer | entrochem, inc., Columbus, Ohio, under the ECA-460 trade designation | Heat and light stabilizer system |
| Isocyanate | entrochem, inc., Columbus, Ohio, under the ECA-387 trade designation | Aliphatic polyisocyanate |
| Adhesive | entrochem, inc., Columbus, Ohio, under the ECA-153 trade designation | Acrylic pressure sensitive adhesive |

### Carrier Laver

Three different carrier layers for multi-layer protective sheets of the invention were formed based on the components described in Table 2 and the proportionate amounts shown in Tables 3-5. Weight percentages are reported based on overall weight of the resulting film comprising the carrier layer.

**Table 3 (Film 1)**

| **Weight %** | **Component** |
|---|---|
| 53.0319 | High MW Polyol |
| 29.0160 | Mid MW Polyol A |
| 0.5223 | Low MW Polyol |
| 0.0049 | Catalyst |
| 0.9852 | UV Initiator |
| 0.4926 | UV Stabilizer |
| 10.9471 | Isocyanate |

**Table 4 (Film 2)**

| **Weight %** | **Component** |
|---|---|
| 37.4221 | Mid MW Polyol B |
| 5.6133 | Mid MW Polyol C |
| 8.4200 | Low MW Polyol |
| 0.0049 | Catalyst |
| 0.9852 | UV Initiator |
| 0.4926 | UV Stabilizer |
| 47.0620 | Isocyanate |

**Table 5 (Film 3)**

| **Weight %** | **Component** |
|---|---|
| 10.5903 | Mid MW Polyol B |
| 22.5044 | Mid MW Polyol D |
| 10.4844 | Low MW Polyol |
| 0.0049 | Catalyst |
| 0.9852 | UV Initiator |
| 0.4926 | UV Stabilizer |
| 54.9382 | Isocyanate |

### Topcoat Layer

An acrylic-based polyurethane topcoat layer for multi-layer protective sheets of a comparative example was formed from aliphatic acrylic polyols and aliphatic polyisocyanate polymer, which components were polymerized on the carrier layer in-situ after being coated to a thickness of 1-28 microns, preferably 5-15 microns. In a preferred embodiment, the polymerizable components were coated to a thickness of about 10 microns.

### Adhesive Layer

An adhesive layer for multi-layer protective sheets was formed based on the Adhesive component described in Table 2 and positioned on the carrier layer opposite the topcoat layer.

## Claims

1. A method for making a multi-layer protective sheet comprising sequential layers, the method comprising steps as follows:
providing a topcoat layer;
providing a polyurethane-based carrier layer; and
providing an adhesive layer;
wherein the adhesive and carrier layers are formed by co-extrusion of polymerizable compositions starting in their liquid form that are in-situ polymerized to simultaneously form the adhesive and carrier layers.

2. The method of claim 1, wherein the topcoat layer is polyurethane-based.

3. The method of any one of the foregoing claims, wherein the adhesive layer comprises (meth)acrylate chemistry.

4. The method of any one of the foregoing claims, wherein the carrier layer has a peak loss factor of at least 0.8, preferably of at least 1.2 when tested as a standalone film according to the Loss Factor Test Method described herein.

5. The method of any one of the foregoing claims, wherein half-height loss factors of the carrier layer occur across a temperature span of less than 40°C when the carrier layer is tested as a standalone film according to the Loss Factor Test Method described herein

6. The method of any one of the foregoing claims, wherein the carrier layer has a peak loss factor that occurs at a temperature of at least 35°C when tested as a standalone film according to the Loss Factor Test Method described herein.

7. The method of any one of the foregoing claims, wherein the adhesive layer further comprises a release film on an exterior surface thereof.

8. The method of any one of the foregoing claims, wherein the topcoat layer further comprises a polymer liner on an exterior surface thereof, or wherein the method further comprises applying a polymer liner to an exterior surface of the topcoat layer.

9. The method of any one of the foregoing claims, wherein the topcoat and carrier layers are in-situ polymerized at a temperature below 40°C.

10. A method of protecting a surface on a motorized vehicle, the method comprising:
carrying out a method of any preceding claim to provide a multi-layer protective sheet comprising sequential layers; and
applying the sheet to the surface of the motorized vehicle.

## Patentansprüche

1. Verfahren zum Herstellen einer mehrschichtigen Schutzfolie, umfassend aufeinanderfolgende Schichten, wobei das Verfahren die folgenden Schritte umfasst:
Bereitstellen einer Deckschicht;
Bereitstellen einer Trägerschicht auf Polyurethanbasis; und
Bereitstellen einer Klebeschicht;
wobei die Klebstoff- und Trägerschichten durch Koextrusion von polymerisierbaren Zusammensetzungen gebildet werden, die in ihrer flüssigen Form beginnen und In-situ polymerisiert werden, um gleichzeitig die Klebstoff- und Trägerschichten zu bilden.

2. Verfahren nach Anspruch 1, wobei die Deckschicht auf Polyurethanbasis ist.

3. Verfahren nach einem der vorstehenden Ansprüche, wobei die Klebstoffschicht eine (Meth-)Acrylatchemie umfasst.

4. Verfahren nach einem der vorstehenden Ansprüche, wobei die Trägerschicht einen Spitzenverlustfaktor von mindestens 0,8 aufweist, vorzugsweise von mindestens 1,2 aufweist, wenn sie als eigenständiger Film gemäß dem hierin beschriebenen Verlustfaktor-Testverfahren geprüft wird.

5. Verfahren nach einem der vorstehenden Ansprüche, wobei die Verlustfaktoren der Trägerschicht auf halber Höhe über eine Temperaturspanne von weniger als 40 °C auftreten, wenn die Trägerschicht als eigenständiger Film gemäß dem hierin beschriebenen Verlustfaktor-Testverfahren geprüft wird.

6. Verfahren nach einem der vorstehenden Ansprüche, wobei die Trägerschicht einen Spitzenverlustfaktor aufweist, der bei einer Temperatur von mindestens 35 °C auftritt, wenn diese als eigenständiger Film gemäß dem hierin beschriebenen Verlustfaktor-Testverfahren geprüft wird.

7. Verfahren nach einem der vorstehenden Ansprüche, wobei die Klebeschicht ferner eine Trennfolie auf einer Außenfläche davon umfasst.

8. Verfahren nach einem der vorstehenden Ansprüche, wobei die Deckschicht ferner eine Polymerauskleidung auf einer Außenfläche derselben umfasst, oder wobei das Verfahren ferner das Aufbringen einer Polymerauskleidung auf eine Außenfläche der Deckschicht umfasst.

9. Verfahren nach einem der vorstehenden Ansprüche, wobei die Deckschicht und die Trägerschicht bei einer Temperatur unter 40 °C In-situ polymerisiert werden.

10. Verfahren zum Schützen einer Oberfläche eines Kraftfahrzeugs, wobei das Verfahren Folgendes umfasst:
Durchführen eines Verfahrens nach einem der vorhergehenden Ansprüche, um eine mehrschichtige Schutzfolie bereitzustellen, umfassend aufeinanderfolgende Schichten; und
Aufbringen der Folie auf der Oberfläche des Kraftfahrzeugs.

## Revendications

1. Procédé de production d'une feuille de protection multicouche comprenant des couches séquentielles, le procédé comprenant les étapes suivantes :
la fourniture d'une couche de finition ;
la fourniture d'une couche de support à base de polyuréthane ; et
la fourniture d'une couche adhésive ;
dans lequel les couches adhésive et de support sont formées par co-extrusion de compositions polymérisables en commençant dans leur forme liquide qui sont polymérisées sur site pour former simultanément les couches adhésive et de support.

2. Procédé selon la revendication 1, dans lequel la couche de finition est à base de polyuréthane.

3. Procédé selon l'une quelconque des revendications précédentes, dans lequel la couche adhésive comprend une chimie à base de (méth)acrylate.

4. Procédé selon l'une quelconque des revendications précédentes, dans lequel la couche de support présente un facteur de perte de pic d'au moins 0,8, de préférence d'au moins 1,2 lorsqu'elle est testée en tant qu'un film autonome dans un procédé de test du facteur de perte décrit dans le présent document.

5. Procédé selon l'une quelconque des revendications précédentes, dans lequel des facteurs de perte à mi-hauteur de la couche de support surviennent à travers une plage de températures inférieures à 40 °C lorsque la couche de support est testée en tant qu'un film autonome selon le procédé de test du facteur de perte décrit dans le présent document.

6. Procédé selon l'une quelconque des revendications précédentes, dans lequel la couche de support présente un facteur de perte de pic qui survient à une température d'au moins 35 °C lorsqu'elle est testée en tant qu'un film autonome selon le procédé de test du facteur de perte décrit dans le présent document.

7. Procédé selon l'une quelconque des revendications précédentes, dans lequel la couche adhésive comprend en outre un film anti-adhésif sur une surface extérieure de celle-ci.

8. Procédé selon l'une quelconque des revendications précédentes, dans lequel la couche de finition comprend en outre un revêtement polymère sur une surface extérieure de celle-ci, ou dans lequel le procédé comprend en outre l'application d'un revêtement polymère sur une surface extérieure de la couche de finition.

9. Procédé selon l'une quelconque des revendications précédentes, dans lequel les couches de finition et de support sont polymérisées sur site à une température inférieure à 40 °C.

10. Procédé de protection d'une surface sur un véhicule motorisé, le procédé comprenant :
la réalisation d'un procédé selon l'une quelconque des revendications précédentes, pour fournir une feuille de protection multicouche comprenant des couches séquentielles ; et
l'application de la feuille sur la surface du véhicule motorisé.
